# EUROPÄISCHE PATENTSCHRIFT

(11) **EP 1 286 013 B1**
(45) Veröffentlichungstag und Bekanntmachung des Hinweises auf die Patenterteilung: **04.08.2004**
(21) Anmeldenummer: 02018524.5
(22) Anmeldetag: 16.08.2002
(51) Int. Cl.: E06B 3/30, E06B 1/34, F16B 21/12

(54) **Befestigungselement für einen Metallteil**
Fixing element for a metal piece
Elément pour fixation d'une pièce de métal

(30) Priorität: 17.08.2001 AT 12922001
(43) Veröffentlichungstag der Anmeldung: 26.02.2003
(73) Patentinhaber: WINDBICHLER, Georg, 2822 Walpersbach (AT)
(72) Erfinder: WINDBICHLER, Georg, 2822 Walpersbach (AT)
(74) Vertreter: Krause, Peter

(56) Entgegenhaltungen:
- DE-B- 2 031 184
- DE-U- 20 004 154
- DE-U- 29 608 044
- FR-A- 935 686
- GB-A- 1 024 746

## Beschreibung

Die Erfindung betrifft ein Befestigungselement für einen Metallteil, ein flächiges Steinelement od. dgl. auf einem Profil, insbesondere einem Holzprofil.

In der momentanen Philosophie des Bauwesens, also vorzugsweise beim Neubau von Gebäuden wird, insbesondere in ländlichen Gebieten, auf traditionelle Baustile gerne zurückgegriffen. Dieser Trend setzt sich vor allem auf Grund des Gedankens der Revitalisierung von Gebäuden bzw. Orts- und Stadtteilen immer mehr durch.

Ein Kennzeichen dieser seinerzeit gepflegten Baustile waren Verzierungen, die beispielsweise die Fassade eines Gebäudes verschiedenst zur Geltung brachten. Ferner waren aber auch Stuckaturen, auch Faschen genannt, die um das Fenster vorgesehen wurden, sehr beliebt. Die Fenster bzw. die Bereiche der Fenster eines Gebäudes sind immer ein markantes Element des angewandten Baustils und prägen natürlich den Flächeneindruck bzw. die - gestaltung.

Um nun die Fenster eines Gebäudes zu einem besonderen Blickfang zu machen, wurden bereits verschiedenste Vorschläge gemacht. Einer der einfachsten Vorschläge hat sich dadurch ausgezeichnet, dass die äußere Seite des Fensterstockes und der Fensterrahmen mehr oder minder mit grellen Farben gestrichen wurden.

Ein weiterer Vorschlag zur besseren Visualisierung der Fenster waren Verkleidungen des Fensterstockes bzw. der Fensterrahmen. Derartige Verkleidungen sind beispielsweise Flächenelemente aus Kunststoff, die eine glatte, ebene Oberfläche aufweisen. Solche Verkleidungen sind direkt mit dem Material des Fensters, wie dem Fensterstock oder dem Fensterrahmen, verbunden. Derartige direkte Verbindungen haben aber den Nachteil, dass das Stock- und Rahmenmaterial durch Risse in den Flächenelementen und Witterungseinflüsse, vor allem durch die Nässe, zu faulen beginnt.

Aufgabe der Erfindung ist es daher, ein Befestigungselement der eingangs zitierten Art zu schaffen, das die oben aufgezeigten Nachteile vermeidet und das anderseits die normgemäßen Sicherheitsvorschriften erfüllt.

Die Aufgabe wird durch die Erfindung gelöst.

Ein z.B. aus GB-A-1 024 746 bekanntes Befestigungselement ist dadurch gekennzeichnet, dass ein in das Profil einsetzbarer Bolzen vorgesehen ist, der an einem Ende einen plattenförmigen Kopf mit einem Befestigungsteil für eine formschlüssige Verbindung aufweist und dass ein Passstück vorgesehen ist, das am Metallteil bzw. am Steinelement angeordnet ist und dass zur formschlüssigen Verbindung des Profiles mit dem Metallteil bzw. dem Steinelement das Passstück mit einem zum Befestigungsteil korrespondierenden Teil versehen ist und mit dem Befestigungsteil am Kopf verbindbar ist. Der erfindungsgemäße Bolzen ist in dem dem Kopf abgewandten Bereich mit einer Durchgangsbohrung versehen , wobei in der Durchgangsbohrung ein Sicherungsstift befestigbar ist. Mit der Erfindung ist es möglich, Metallteile oder flächige Steinelemente an einem Profil, insbesondere einem Holzprofil, derart zu befestigen, dass zwischen dem tragendem Material, also beispielsweise dem Fensterstock und dem aufzubringenden Element, also beispielsweise einer mit Ornamenten versehenen Metallplatte, ein Spalt gegeben ist. Dieser Spalt erlaubt die Zirkulation der Luft sowie einen Raum für die gezielte Entwässerung, wodurch etwaige Witterungseinflüsse keinen Schaden mehr verursachen.

Ferner hat das erfindungsgemäße Befestigungselement den Vorteil, dass durch dessen Konstruktion die sicherheitstechnischen Erfordernisse erfüllt werden. Ein weiterer Vorteil ist in der Einfachheit der Konstruktion zu erblicken, wodurch die Herstellkosten minimalisiert werden. Eine weitere Senkung der Herstellkosten kann dadurch erreicht werden, dass große Stückzahlen gefertigt werden können, da die einzelnen Teile des Befestigungselementes universal sind.

Gemäß einem besonderen Merkmal der Erfindung ist der am plattenförmigen Kopf vorgesehene Befestigungsteil eine Schwalbenschwanznut. Eine derartige Schwalbenschwanznut ist herstellungstechnisch rationell zu fertigen und eignet sich optimal für eine formschlüssige Verbindung. Ferner sind durch die Schwalbenschwanznut auch Längenausdehnungen auf Grund von Temperaturschwankungen und feuchtigkeitsbedingte Längenänderungen der Holzprofile möglich.

Nach einer Weiterbildung der Erfindung ist das korrespondierende Passstück im Querschnitt trapezförmig ausgebildet. Wie bereits erwähnt ist eine formschlüssige Verbindung mit diesen Befestigungsteilen einfach und vor allem auch funktionssicher.

Gemäß einer besonderen Ausgestaltung der Erfindung ist die Schwalbenschwanznut im plattenförmigen Kopf mittig angeordnet. Dadurch können aufwendige Zentrierungen eingespart werden.

Nach einer alternativen Ausgestaltung der Erfindung ist der Kopf des Bolzens trapezförmig ausgebildet und das korrespondierende Passstück weist eine Schwalbenschwanznut auf. Auch diese Möglichkeit der formschlüssigen Verbindung kann in Betracht gezogen werden.

Gemäß einem besonderen Merkmal der Erfindung verläuft die Achse der Durchgangsbohrung zur Achse der Schwalbenschwanznut parallel und/oder quer und/oder variabel. Dadurch können die sicherheitstechnischen Auflagen gewährleistet werden. Ein ungewolltes Entfernen des Sicherheitsstiftes ist dadurch praktisch unmöglich.

Nach einer weiteren Ausgestaltung der Erfindung ist die Durchgangsbohrung senkrecht zur Achse des Bolzens vorgesehen. Auch dadurch können die sicherheitstechnischen Auflagen erfüllt werden.

Nach einer besonderen Ausgestaltung der Erfindung ist der Bolzen mit seinem plattenförmigen Kopf und/oder das Passstück aus schmiedbarem Metall gefertigt. Derartige Materialien haben sich im Zuge der Revitalisierung von Gebäuden bestens bewährt.

Gemäß einem weiteren Merkmal der Erfindung ist das Profil ein Holzprofil, insbesondere ein Fenster- bzw. Türstock oder ein Fenster- bzw. Türrahmen. Gerade diese Bauelemente bieten sich als Blickfang in der traditionellen Bauweise an. Eine künstlerische Ausgestaltung für diese Bauelemente drängt sich förmlich auf.

Nach einer Weiterbildung der Erfindung ist der Metallteil aus schmiedbarem Metall hergestellt. Wie bereits erwähnt eignen sich solche Materialien hervorragend für eine künstlerische Ausgestaltung und haben sich auf diesem Sektor etabliert, da sie die Handwerkskunst als Basis haben.

Die Erfindung im Rahmen der anliegenden Patentansprüche wird an Hand von Ausführungsbeispielen, die in der Zeichnung dargestellt sind, näher erläutert.

Es zeigen:
- Fig. 1: einen Bolzen mit seinem plattenförmigen Kopf in Schrägansicht,
- Fig. 2: ein Passstück in Schrägansicht
- Fig. 3 und 4: eine Alternative von Kopf und Passstück und
- Fig. 5: einen Schnitt durch einen mit Metallteilen verkleideten Fensterstock bzw. -rahmen eines Fensters.

Einführend sei festgehalten, dass gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich, usw. auf die unmittelbar beschriebene sowie dargestellte Figur bezogen und sind bei einer Lageänderung sinngemäß auf die neue Lage zu übertragen.

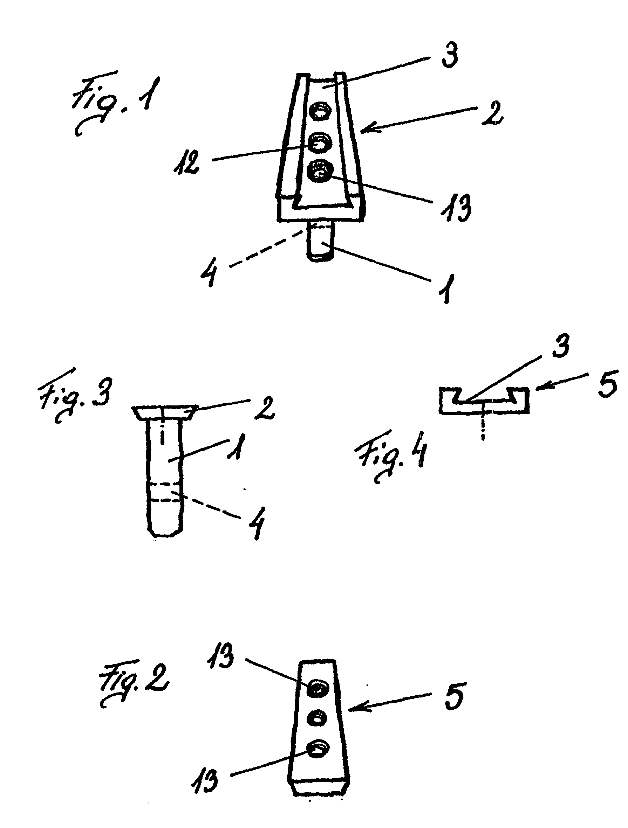

Gemäß der Fig. 1 ist ein Teil eines Befestigungselementes für eine formschlüssige Verbindung, nämlich ein in ein Profil einsetzbarer Bolzen 1 mit einem plattenförmigen Kopf 2 gezeigt. In dem plattenförmigen Kopf 2 ist eine Schwalbenschwanznut 3, die mittig angeordnet ist, vorgesehen. Diese Schwalbenschwanznut 3 kann beispielsweise durch Fräsen hergestellt werden. Der Bolzen 1 ist in dem dem Kopf 2 abgewandten Bereich mit einer Durchgangsbohrung 4 versehen. Diese Durchgangsbohrung 4 dient zur Aufnahme eines Stiftes, der für die Sicherung des Bolzens 1 gegen ungewolltes Entfernen vorgesehen ist. Die Achse der Durchgangsbohrung 4 verläuft zur Achse der Schwalbenschwanznut 3 senkrecht. Dadurch können sicherheitstechnische Aufgaben erfüllt werden.

Die Höhe des plattenförmigen Kopfes 2 sowie der Durchmesser des Bolzens1 kann entsprechend seiner Verwendungsfunktion festgelegt werden.

Zur Befestigung des plattenförmigen Kopfes 2 am Bolzen 1 ist die Bohrung 12 für gegebenenfalls eine Schraubverbindung vorgesehen.

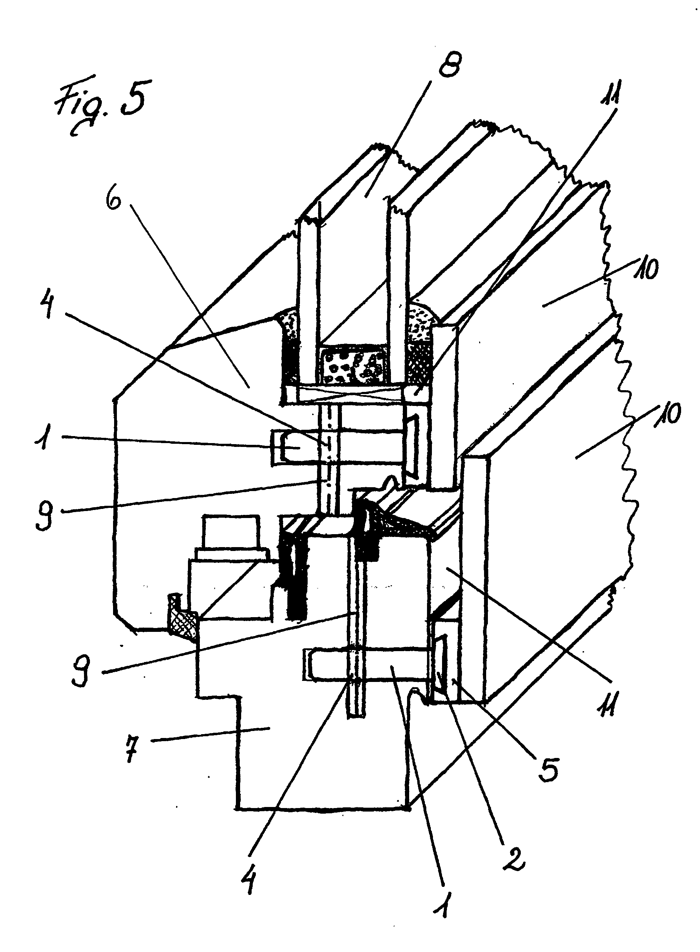

Als Gegenstück für die formschlüssige Verbindung ist gemäß Fig. 2 ein Passstück 5 vorgesehen. Dieses Passstück 5 ist im Querschnitt trapezförmig ausgebildet und korrespondiert mit der Schwalbenschwanznut 3 des plattenförmigen Kopfes 2. Auf der der Schwalbenschwanznut 3 abgewandten Seite des Passstückes 5 ist der - in dieser Fig. 2 nicht dargestellte - Metallteil, der als Verkleidung dienen soll, befestigt. Die Befestigung kann über eine einfache Schraubverbindung, über die vorgesehenen Bohrungen 13 hergestellt werden. Zur formschlüssigen Verbindung wird das Passstück 5 in die Schwalbenschwanznut 3 eingeführt.

Natürlich ist, gemäß Fig. 3 und 4, auch als alternative Lösung der formschlüssigen Verbindung ein Tausch von trapezförmigen Passstück 5 und Schwalbenschwanznut 3 möglich. In diesem Fall wird der plattenförmige Kopf 2 mit trapezförmigem Querschnitt ausgebildet und mit dem Bolzen 1 verbunden. Die Schwalbenschwanznut 3 ist im Passstück 5 vorgesehen.

Da der Bolzen 1, der plattenförmige Kopf 2 und das Passstück 5 in einer B-Teil-Fertigung hergestellt werden, weisen beide Teile die Bohrungen 13 auf.

Der Bolzen 1 mit seinem plattenförmigen Kopf 2 sowie das Passstück 5 können aus schmiedbarem Metall hergestellt sein. Es sind aber natürlich alle dafür geeigneten Materialien verwendbar.

Gemäß der Fig. 5 wird als Profil, das mit einer Verkleidung versehen wird, ein Fensterrahmen 6 bzw. -stock 7, die beide aus Holz gefertigt sind, gezeigt. In dem Fensterrahmen 6 ist beispielsweise eine Isolierglasscheibe 8 angeordnet.

Zur Verkleidung dieser Holzprofile wird in den Fensterrahmen 6 bzw. in den Fensterstock 7 der Bolzen 1 in eine Bohrung eingesetzt. In einem Winkel von 90° zu diesem Bolzen 1 wird ein Sicherungsstift 9, durch eine weitere geeignete Bohrung im Profil in die Durchgangsbohrung 4 des Bolzens 1 gesteckt oder geschraubt. Damit ist der Bolzen 1 gegen ein etwaiges Entfernen gesichert.

Der als Verkleidung dienende Metallteil 10 oder das flächige Steinelement weist das korrespondierende Passstück 5 auf. Das Passstück 5 und der plattenförmige Kopf 2 werden, entsprechend ihrer Ausgestaltung, zu einer formschlüssigen Verbindung mit einander verbunden.

Durch die Höhe des plattenförmigen Kopfes 2 ist zwischen Profil und Verkleidung ein Spalt 11 gegeben. Wie bereits erwähnt, dient dieser Spalt 11 der Belüftung und Entwässerung, wodurch die Holzprofile nicht dem Fäulnisprozess auf Grund mangelnder Luftzufuhr ausgesetzt werden.

### Die Montage eines derartigen Rahmens erfolgt wie nachstehend aufgezeigt:

Die Metallteile 10 werden zu einem Rahmen verschweißt. An der der Profilseite zugekehrten Seite werden die Passstücke 5 befestigt. Mit diesen Passstücken 5 wird der plattenförmige Kopf 2 des Bolzens 1 zusammengefügt. Dieser mit den Bolzen 1 versehene Rahmen wird in den Fensterrahmen 6 oder Fensterstock 7 eingesetzt. Das heißt, die Bolzen 1 werden in die im Fensterrahmen 6 oder Fensterstock 7 vorgesehenen Bohrungen eingeführt. Nun wird der Sicherungsstift 9 eingesetzt.

Dadurch, dass die Achse der Schwalbenschwanznut 3 vorzugsweise immer in der Längserstreckung der Metallteile 10 liegt, ist ein unbeabsichtigtes Entfernen des Rahmens nicht möglich.

Abschließend sei der Ordnung halber darauf hingewiesen, dass in der Zeichnung einzelne Bauteile und Baugruppen zum besseren Verständnis der Erfindung unproportional und maßstäblich verzerrt dargestellt sind.

## Patentansprüche

1. Befestigungselement für einen Metallteil, ein flächiges Steinelement od. dgl. auf einem Profil, insbesondere einem Holzprofil, wobei ein in das Profil einsetzbarer Bolzen (1) vorgesehen ist, der an einem Ende einen plattenförmigen Kopf (2) mit einem Befestigungsteil für eine formschlüssige Verbindung aufweist, wobei in der Durchgangsbohrung (4) ein Sicherungsstift (9) befestigbar ist und wobei ein Passstück (5) vorgesehen ist, das am Metallteil (10) bzw. am Steinelement angeordnet ist und dass zur formschlüssigen Verbindung des Profiles mit dem Metallteil (10) bzw. dem Steinelement das Passstück (5) mit einem zum Befestigungsteil korrespondierenden Teil versehen ist und mit dem Befestigungsteil am Kopf (2) verbindbar ist **dadurch gekennzeichnet, dass** der Bolzen (1) in dem dem Kopf (2) abgewandten Bereich mit einer Durchgangsbohrung (4) versehen ist.

2. Befestigungselement nach Anspruch 1, **dadurch gekennzeichnet, dass** der am plattenförmigen Kopf (2) vorgesehene Befestigungsteil eine Schwalbenschwanznut (3) ist.

3. Befestigungselement nach Anspruch 1 oder 2, **dadurch gekennzeichnet, dass** das korrespondierende Passstück (5) im Querschnitt trapezförmig ausgebildet ist.

4. Befestigungselement nach Anspruch 2, **dadurch gekennzeichnet, dass** die Schwalbenschwanznut (3) im plattenförmigen Kopf (2) mittig angeordnet ist.

5. Befestigungselement nach Anspruch 1, **dadurch gekennzeichnet, dass** der Kopf des Bolzen (1) trapezförmig ausgebildet ist und das korrespondierende Passstück (5) eine Schwalbenschwanznut (3) aufweist.

6. Befestigungselement nach Anspruch 2, **dadurch gekennzeichnet, dass** die Achse der Durchgangsbohrung (4) zur Achse der Schwalbenschwanznut (3) parallel und/oder quer und/oder variabel verläuft.

7. Befestigungselement nach mindestens einem der vorhergehenden Ansprüche, **dadurch gekennzeichnet, dass** die Durchgangsbohrung (4) senkrecht zur Achse des Bolzens (1) vorgesehen ist.

8. Befestigungselement nach mindestens einem der vorhergehenden Ansprüche, **dadurch gekennzeichnet, dass** der Bolzen (1) mit seinem plattenförmigen Kopf (2) und/oder das Passstück (5) aus schmiedbarem Metall gefertigt ist.

9. Befestigungselement nach mindestens einem der vorhergehenden Ansprüche, **dadurch gekennzeichnet, dass** das Profil ein Holzprofil, insbesondere ein Fenster- (7) bzw. Türstock oder ein Fenster- (6) bzw. Türrahmen ist.

10. Befestigungselement nach mindestens einem der vorhergehenden Ansprüche, **dadurch gekennzeichnet, dass** der Metallteil (10) aus schmiedbarem Metall hergestellt ist.

## Claims

1. Mounting element for a metal part, a flat stone element, or the like, on a profile, particularly a wooden profile, featuring a bolt (1) with a disc-shaped head (2) to be inserted into the profile, which has a mounting element for a positive connection, and for which a fitting piece (5) is provided that is placed on the metal part (10) or on the stone element, the fitting piece (5) being equipped with a part corresponding to the mounting part for a positive connection of the profile with the metal part (10) or with the stone element, that is combinable with the mounting part on the head (2), **characterized by** the fact that the bolt (1) features a through hole on the opposite side of the head (2), in which a locking pin (9) can be attached.

2. Mounting element according to claim 1, **characterized by** the fact that the mounting part provided for the disc-shaped head (2) is a dovetail groove (3).

3. Mounting element according to claim 1 or 2, **characterized by** the fact that the cross section of corresponding fitting piece (5) has a trapezoidal shape.

4. Mounting element according to claim 2, **characterized by** the fact that the dovetail groove (3) in the disc-shaped head (2) is located in the centre.

5. Mounting element according to claim 1, **characterized by** the fact that the head of the bolt (1) has a trapezoidal shape and the corresponding fitting piece (5) features a dovetail groove (3).

6. Mounting element according to claim 2, **characterized by** the fact that the axis of the through hole (4) runs parallel and/or lateral and/or variable to the axis of the dovetail groove (3).

7. Mounting element according to at least one of the previous claims, **characterized by** the fact that the through hole (4) runs vertical to the axis of the bolt (1).

8. Mounting element according to at least one of the previous claims, **characterized by** the fact that the bolt (1) with its disc-shaped head (2) and/or the fitting piece (5) are made of forgeable metal.

9. Mounting element according to at least one of the previous claims, **characterized by** the fact that the profile is a wooden profile, in particular a window case (7) or a door case, or a window frame (6) or a door frame.

10. Mounting element according to at least one of the previous claims, **characterized by** the fact that the metal part (10) is made of forgeable metal.

## Revendications

1. Elément de fixation pour une pièce en métal, un élément plat en pierre ou semblable, sur un profilé, en particulier un profilé en bois, prévoyant un boulon (1) qui peut être inséré dans le profilé et est doté d'un côté d'une tête plate (2) avec une partie de fixation pour une liaison à engagement positif et doté d'un raccord (5), placé sur la pièce en métal (10) ou l'élément en pierre ; afin d'obtenir une liaison à engagement positif du profilé avec la pièce en métal (10) ou l'élément en pierre, le raccord (5) est doté d'une pièce correspondante avec la pièce de fixation pouvant être lié avec la tête (2) de l'élément de fixation, **caractérisée en ce que** le boulon (1) possède dans sa partie opposée à la tête (2) une perforation (4) dans laquelle peut être insérée une goupille de sécurité (9)

2. Elément de fixation selon la revendication 1, **caractérisé en ce que** la partie de fixation prévue à tête plate (2) est une rainure de queue d'aronde (3).

3. Elément de fixation selon la revendication 1 ou 2, **caractérisé en ce que** le raccord correspondant (5) est doté dans sa section transversale d'une forme trapézoïdale.

4. Elément de fixation selon la revendication 2, caratérisé en ce que la rainure de queue d'aronde (3) est positionnée au milieu de la tête plate (2).

5. Elément de fixation selon la revendication 1, caratérisé en ce que la tête du boulon (1) a une forme trapézoïdale et que le raccord correspondant (5) est doté d'une rainure de queue d'aronde (3).

6. Elément de fixation selon la revendication 2, caratérisé en ce que l'axe de la perforation (4) est parallèle et/ou transversal et/ou variable par rapport à l'axe de la rainure de queue d'aronde (3).

7. Elément de fixation selon au moins une des revendications ci-dessus, **caractérisé en ce que** la perforation (4) est prévue horizontalement par rapport à l'axe du boulon (1).

8. Elément de fixation selon au moins une des revendications ci-dessus, **caractérisé en ce que** le boulon (1) avec sa tête plate (2) et/ou le raccord (5) est fabriqué en métal forgeable.

9. Elément de fixation selon au moins une des revendications ci-dessus, **caractérisé en ce que** le profilé est un profilé en bois, en particulier un châssis de fenêtre (7) ou de porte ou un encadrement de fenêtre (6) ou de porte.

10. Elément de fixation conformément à au moins une des revendications ci-dessus, **caractérisé en ce que** la pièce en métal (10) est fabriquée en métal forgeable.
